# EUROPEAN PATENT APPLICATION

(11) **EP 3 871 794 A1**
(43) Date of publication of application: **01.09.2021**
(21) Application number: 20159280.5
(22) Date of filing: 25.02.2020
(51) Int. Cl.: B05C 5/00, B32B 37/00

(54) **FREE-FORM DISPENSING AND LAMINATION**

(71) Applicant: Henkel AG & Co. KGaA, 40589 Düsseldorf (DE)
(72) Inventor: KUTLU, Burak, 80995 München (DE); BILCAI, Eugen, 85764 Oberschleissheim (DE)
(74) Representative: Viering, Jentschura & Partner mbB Patent- und Rechtsanwälte

(57) **Abstract**

The present invention is directed to a method for depositing a liquid optically clear adhesive (LOCA), a liquid optically clear adhesive (LOCA)-dispensing appliance, a method for manufacturing a laminated article using said appliance, and a laminated article obtainable in a such a manufacturing method.

## Description

The present invention is directed to a method for depositing a liquid optically clear adhesive (LOCA), a liquid optically clear adhesive (LOCA)-dispensing appliance, a method for manufacturing a laminated article using said appliance, and a laminated article obtainable in a such a manufacturing method.

Optically clear adhesives and especially liquid optically clear adhesives (LOCAs) primarily find application in optical displays. Optical bonding in display applications is used to bond optical elements such as display panels, glass plates, touch panels, diffusers, rigid compensators, heaters, and flexible films such as polarizers and retarders. Especially the use of such adhesives for bonding in touch displays, for example, capacitive touch displays is of high interest. The importance of optically clear adhesives is still growing since the continuous development of new electronic display products, such as wireless reading devices, increases the demands for optically clear adhesives. However, there are yet some challenges to be mastered.

Conventional displays have rectangular shapes and the existing LOCA application methods were developed for exactly those rectangular display geometries. Conventional LOCA application methods include single point, multi bead and slit coating dispensing methods. These application methods are not suitable for the application onto so called free-form displays, i.e. display substrates having geometries other than strictly rectangular geometries but rather irregular shapes, such as displays comprising round edges, curved edges, cut-out sections at the edges and/or within the display surface as well as combinations thereof. The existing LOCA application methods that also allow for LOCA application onto free-form display surfaces, however, are two slow and/or not flexible enough so as to allow for the processing of different free-forms in quick, i.e. economically efficient, succession.

There is a need, therefore, for a method of LOCA-dispensing onto display substrate surfaces that is fast, economically effective and flexible enough for the processing and manufacturing of differing free-form display designs.

This need is met by the object of the present invention, as provided herein is a method for depositing a LOCA onto a free-form display substrate surface, which overcomes the aforementioned problems of state-of-the-art application methods in being fast, economically effective and highly flexible.

This invention can be utilized for 2D, 2.5D and 3D rectangular and free-form substrates as well as multiple displays positioned behind a common cover lens, where the displays can differ in terms of size or shape.

This appliance can further be used in combination with conventional LOCA application methods known in the art, such as single point, multi bead and slit coating dispensing methods.

In one aspect, the present invention thus relates to a method of depositing a liquid optically clear adhesive (LOCA) onto a substrate surface, the dispensing being effected by a dispensing appliance comprising at least one dispensing jet valve that is moved across the substrate surface, characterized in that the at least one jet valve is controllable to be put in either active mode or inactive mode.

In another aspect, the present invention relates to liquid optically clear adhesive (LOCA)-dispensing appliance comprising at least one dispensing jet valve, characterized in that the at least one jet valve is controllable to be put in either active mode or inactive mode.

In a further aspect, the present invention relates to a method for manufacturing a laminated article comprising the steps of:
i) providing a first substrate;
ii) applying a liquid optically clear adhesive (LOCA) onto at least part of the surface of said first substrate; and
iii) laminating said first substrate surface with a second substrate,
   characterized in that step ii) is effected by a liquid optically clear adhesive (LOCA)-dispensing appliance as described herein.

In yet another aspect, the present invention relates to a laminated article obtainable in a method as described herein.

Embodiments of the present invention are described below, but the present invention is not limited thereto. It should be recognized that these embodiments are merely illustrative of the principles of the present invention. Numerous modifications and adaptations will be readily apparent to those of skill in the art without departing from the scope of the invention.

"One or more", as used herein, relates to at least one and comprises 1, 2, 3, 4, 5, 6, 7, 8, 9 or more of the referenced species. Similarly, "at least one" means one or more, i.e. 1, 2, 3, 4, 5, 6, 7, 8, 9 or more.

In the present specification, the terms "a" and "an" and "at least one" are the same as the term "one or more" and can be employed interchangeably.

"About", as used herein in relation to a numerical value, means said value ±10%, preferably ±5%.

The terms "free-form", "free-form design", and "free-form display (design)" are used interchangeably herein and refer to geometries other than strictly rectangular shapes (i.e. surface shapes), i.e. to rather irregular shapes (i.e. surface shapes). An irregularly shaped surface, in the context of the present invention, refers to a planar surface, such as a display surface, that comprises one or more rounded edges, one or more curved edges, one or more cut-out sections at the edges and/or within the (display) surface, or any combination thereof.

The term "liquid optically clear adhesive" (LOCA), as used herein, is well established in the art and well known to a person skilled in the art. Liquid optically-clear adhesives are widely used in touch panels and display devices to bind the cover lens, plastic or other optical materials to the main sensor unit or to each other. Liquid optically clear adhesives are generally used to improve the optical characteristics of the device as well as improve other attributes such as durability. For instance, liquid optically clear adhesives are generally used to bond the touch panel to the main liquid crystal display, and also to bond any protective cover, such as the lens, to the touch panel. Major applications of liquid optically clear adhesives also include capacitive touch panels, 3D televisions and glass retarders. In particular, the adhesive is optically clear, if it exhibits an optical transmission of at least about 85 %. Methods for the measurement of optical transmission are known to the person skilled in the art. Preferably, the optical transmission may be measured on a 100 m thick sample according to the following testing method: A small drop of optically clear adhesive is placed on a 75 mm by 50 mm plain micro slide (a glass slide from Dow Corning, Midland, MI), that has been wiped three times with isopropanol and has two 100 µm thick spacer tapes attached at its two ends. A second glass slide is attached onto the adhesive under a force. Then the adhesive is fully cured. The optical transmission is measured in the wavelength range of 380 nm to 780 nm with a spectrometer Cary 300 from Agilent. One blank glass slide is used as background.

The term "liquid", as used herein, refers to compounds or mixtures of compounds that are flowable and pourable at room temperature (about 15 °C to about 25 °C).

As used herein, the terms "data," "content," "information" and similar terms may be used interchangeably to refer to data capable of being transmitted, received and/or stored in accordance with some embodiments of the present invention.

Provided herein is a method for depositing a liquid optically clear adhesive (LOCA) onto a substrate surface, the dispensing being effected by a dispensing appliance comprising at least one dispensing jet valve that is moved across the substrate surface, characterized in that the at least one jet valve is controllable to be put in either active mode or inactive mode.

Accordingly, herein described is also a dispensing appliance comprising at least one dispensing jet valve, the dispensing appliance effecting the LOCA deposition onto a substrate surface, i.e. at least part of said substrate surface.

A dispensing appliance according to the present invention essentially comprises at least one jet valve suitable for dispensing the LOCA, as herein described below, optionally at least one scanning unit, as herein described below, and may be described, essentially, as a scaffold carrying and housing at least the aforementioned parts. Generally, it is intended that the dispensing appliance is part of an apparatus suitable for applying a LOCA onto a substrate surface, as generally known in the art. The scaffold design of the dispensing appliance is not particularly restricted to a specific design or scaffold material and may be varied, adapted and modified to allow for user friendly and economically effective end-use thereof, and is thus not to be considered as limiting the scope of the present invention in any way.

In the context of the present invention, a "jet valve" is intended to refer to an assembly of parts constituting an individual dispensing unit.

According to the present invention, the at least one jet valve dispenses the LOCA onto at least part of the substrate surface while the entire dispensing appliance is moved across the substrate surface. To this end, the LOCA will be fed to the jet valve, for instance from a storage/retention container to be, eventually, ejected by the jet valve.

The at least one jet valve, as part of the herein described dispensing appliance, is, according to the present invention, controllable to be put in either active mode or inactive mode.

In the context of the present invention, the term "controllable" means that the respective device/unit/appliance may be controlled to react. Said controlling may encompass electronic controlling, pneumatic controlling, hydraulic controlling, or combinations thereof.

For instance, according to various embodiments, the at least one jet valve may be electronically controlled and may be either electronically connected to one or more other parts of the dispensing appliance, as described herein, so as to receive and/or provide electronic signals from and to said other parts, respectively, or is equipped to receive and/or provide optical and/or radio signals, either from other parts of the dispensing appliance and/or apparatus, or from independently working devices, such as a scanning unit and or a data processing unit that are not part of the dispensing apparatus itself.

In the context of the present invention, the term "signal" refers to a radio, optical or electronic signal.

In the context of the present invention, the term "electronically controllable", for instance, means that upon receiving a respective signal, the respective apparatus, e.g. the jet valve, reacts automatically. "Reacting", as used in this context, is intended to refer to an automatic response actioned by the respective apparatus upon receiving a signal, as defined herein, wherein the nature and/or lifetime (i.e. time period over which the automatic response is actioned) and/or intensity of the respective automatic response are determined and thus triggered by the respective signal received. In the context of the present invention, the automatic response may be actioned immediately, for instance and without limitation within a period of approximately 1 to 100 µs, upon receiving the signal, or may be actioned at a given time after receiving the electronic signal, for instance and without limitation 5 to 10 s after receiving the signal. Thus, a signal may trigger an immediate response or a time-delayed response actioned by said apparatus.

According to various embodiments, the controlling of the LOCA dispensing may be assisted by one or more regulating units, such as a pressure pump or a pumping system, which may be part of the jet valve and/or the dispensing appliance and/or the dispensing apparatus. According to the present invention, such a regulating unit is equipped to receive and/or transmit signals, as herein defined, and, optionally, to generate a response. For instance, the at least one jet valve may be controlled by a pumping system, which pumps the LOCA to the jet valve and which, upon receiving a respective signal, may modulate the pumping intensity, thereby controlling the jet valve in (co)regulating the LOCA depositing.

The term "active mode", as used in the context of the present invention, refers to the dispensing mode of a jet valve. In other words, when in active mode, a jet valve will dispense (eject) the LOCA. According to preferred embodiments, when in active mode, a jet valve dispenses the LOCA continuously.

According to various embodiments, the active mode may comprise varying levels of LOCA dispensing intensity. The level of dispensing intensity may, for instance, be controlled and thus varied through pressure modulation so as to enforce ejection of the LOCA, as described above.

Thus, according to various embodiments, the controlling of the at least one jet valve comprises terminating the dispensing (inactive mode), commencing/initiating the dispensing (active mode) and optionally adapting the dispensing intensity of the at least one jet valve when in active mode.

According to various embodiments, a jet valve and/or a regulating unit, as herein defined, is equipped to receive signals, as herein defined, correlated to data generated by at least one scanning unit/device, preferably an infrared or laser-based scanning device. According to preferred embodiments, such a scanning device may be part of the herein described dispensing appliance and may, for instance and without limitation, be placed in close proximity to the at least one dispensing jet valve.

According to the method of the present invention, said scanning device will scan the surface of the substrate prior to the dispensing of the LOCA onto said surface. According to the present invention, the scanning device is programmed to recognize and thus discriminate substrate surface areas from non-substrate surface areas, and to communicate corresponding signals either directly to the jet valve or to one or more regulating units, as herein defined. According to various embodiments, the data generated by the scanning unit may be transmitted to and optionally saved by a data processing unit, such as a computer, optionally for future recalling. According to various embodiments, the data received and optionally saved by the data processing unit may be communicated to the jet valve and/or one or more regulating units in the form of signals. According to the present invention, the data generated by the scanning unit is used to control the dispensing of the LOCA onto the substrate surface, as herein defined.

According to various embodiments, when the scanning device is active and is moved, as part of the dispensing appliance herein described, across the substrate, the scanning device will recognize, for instance, cut-out sections in not scanning the substrate surface but the surface, which the substrate onto which the LOCA is to be applied is placed on, and will communicate a respective signal to the jet valve or a regulating unit. Upon receiving a signal that communicates a cut-out section, for instance, the jet valve will be controlled to switch from active mode into inactive mode and thus terminate the dispensing of the LOCA (or will continue to withhold the LOCA, when already in inactive mode prior to receiving the respective signal). When scanning and thus recognizing, on the other hand, the substrate surface to be coated, the scanning device will communicate a different signal and the jet valve will be controlled accordingly to commence the dispensing of the LOCA onto the substrate surface (or will continue the dispensing of the LOCA, when already in active mode prior to receiving the respective signal). Thus, the LOCA will be applied only onto the surface of the substrate to be coated and will not be dispensed in, for instance, cut-out sections of the substrate surface.

Thus, according to certain embodiments, the controlling of the at least one jet valve is effected based on the scanning of the position and/or dimensions and/or geometric shape of the substrate surface.

In various embodiments, the scanning and the accordingly triggered response actioned by the jet valve (i.e. dispensing in active mode and non-dispensing in inactive mode) are performed/effected simultaneously. In other words, for instance, when the scanning unit passes over and scans the substrate surface, thus communicating a positive signal triggering the (continuance) of active mode to the jet valve or a regulating unit, the scanning and the dispensing of the LOCA are performed simultaneously, whereas, when the scanning unit passes over and scans a non-substrate surface, thus communicating a negative signal triggering the (continuance) of inactive mode to the jet valve or a regulating unit, the scanning and the withholding of the LOCA are performed simultaneously.

According to various embodiments, the dispensing appliance is moved across the surface of the substrate, onto which the LOCA is to be applied, and the at least one jet valve, as herein described, dispenses the LOCA onto said surface. Generally, it is intended that the dispensing appliance is freely movable along both the x- and the y-axis, wherein the x- and the y-axis define a plane parallel to the plane established by the planar substrate surface to be coated with the LOCA.

According to various embodiments, the dispensing appliance comprises not only one, but a plurality of dispensing jet valves, and each jet valve of the plurality of jet valves can be controlled independently of the other jet valves of the plurality of jet valves. Each embodiment described herein above with respect to the at least one jet valve thus also applies to the plurality of jet valves, as herein described, and *vice versa.*

According to various embodiments, the plurality of jet valves comprises at least two, preferably at least three, more preferably at least four jet valves. According to various embodiments, the plurality of jet valves consists of at least two, preferably at least three, more preferably at least four jet valves, even more preferably at least five, and most preferably at least six jet valves.

In various preferred embodiments, the plurality of jet valves, as herein defined, is arranged linearly. In other words, the jet valves are positioned, as parts of the dispensing appliance, so as to form a line.

To a certain extent, as a general rule, increasing the number of jet valves will result in a decrease in time required for applying a sufficient amount of LOCA onto the substrate surface. In preferred embodiments, wherein the dispensing appliance comprises, for instance, 6 jet valves and wherein the jet valves are arranged linearly, the dispensing appliance may, advantageously, be moved (i.e. may be programmed to move) only along one axis (i.e. either the y- or the x-axis), in other words, from one end of the substrate surface across the substrate surface to the other, opposing end of the substrate surface, wherein further the linearly arranged plurality of jet valves is aligned perpendicular to the respective axis (for instance, the x-axis) along which the appliance is moved, such that the line defined by the plurality of jet valves is in parallel to the respective other axis (for instance, the y-axis), thereby effectively covering the breadth or at least a good part of the breadth of the substrate surface.

The size of the gap in between two jet valves is not particularly restricted and may be freely chosen. However, naturally, one may wish to adjust and tailor gap size and/or LOCA dispensing intensity, i.e. the amount of LOCA dispensed over a certain amount of time, bearing in mind individual physical characteristics of the respective LOCA employed, so as to avoid over- and under-dosing. According to various embodiments, the alignment of the dispensing appliance may be adjusted in order to reduce the effective gap between two dispensing lines by varying the angle in which the linearly arranged plurality of jet valves moves across the substrate surface.

According to certain embodiments, it is preferred that each individual jet valve of the plurality of jet valves is equipped to either directly receive signals, as herein defined, from at least one scanning unit, or to be controlled by one or more regulating units, wherein said at least one scanning unit is programmed to communicate with only this one specific jet valve or with said one or more regulating units, respectively. Thus, according to various embodiments, the dispensing appliance comprises a plurality of scanning units, i.e. two or more scanning units. It is further preferred that, according to such embodiments, each scanning unit is placed in close proximity to the single individual jet valve it communicates with, either directly or *via* one or more regulating units, as described above. Accordingly, while moving the dispensing appliance across the substrate surface, some jet valves may be put/held in active mode, thus dispensing (ejecting) LOCA, while other jet valves may be put/held in inactive mode, thus not dispensing LOCA, depending on the respective data und thus signals generated by each individual scanning unit, thereby taking account of, for instance, cut-out sections at the edges of the substrate surface and/or within the substrate surface.

Thus, in providing for a dispensing appliance comprising at least one or a plurality of individually controllable dispensing jet valves, as herein described, quick, economically effective and form-flexible LOCA application onto differently shaped planar surfaces, such as free-form display surfaces, as herein defined, is allowed for. The programming of state-of-the-art dispensing appliances used for and employed in conventional methods for LOCA application onto free-form substrate surfaces, as herein defined, is a time-consuming and complex process, which needs to be performed for each and every free-form substrate surface layout. The state-of-the-art methods and devices are thus extremely restrictive and inflexible. The herein described dispensing appliance and dispensing method, on the other hand, obviate the need for extensive programming, allowing for the dispensing of LOCA in various target patterns with very little programming effort. Furthermore, a single dispensing appliance of the invention may be employed for the coating of various differently shaped surfaces, i.e. different free-form surfaces, as herein defined.

The above-described embodiments pertain to both a method for depositing a LOCA onto a substrate surface, as herein described, and a LOCA-dispensing appliance comprising at least one dispensing jet valve, characterized in that the at least one jet valve is controllable to be put in either active mode or inactive mode, as herein described.

The methods and devices of the present invention are preferably and advantageously intended for application in the manufacturing of displays and display parts and, more precisely, in the bonding of displays and display parts, which also includes display stacks. In employing the methods and devices of the present invention, differently shaped displays and display parts may be stacked and bonded more quickly and efficiently, with very low programming effort. Instead of with a scanning/teaching unit, this appliance can also be used with a free-programming controlling unit.

Thus, in a further aspect, the present invention also relates to a method for manufacturing a laminated article comprising the steps of:
i) providing a first substrate;
ii) applying a liquid optically clear adhesive (LOCA) onto the at least part of the surface of said first substrate; and
iii) laminating said first substrate surface with a second substrate,
   characterized in that step ii) is effected by a liquid optically clear adhesive (LOCA)-dispensing appliance as herein described above.

The providing of the first substrate (step i)) may include, without limitation, the cleaning of the substrate, for instance the cleaning of the entire substrate, of the substrate surface, which the LOCA is to be applied onto, or only of part of said substrate surface.

The laminating of the first substrate surface, onto which the LOCA has been applied (step ii)), is not restricted to a particular laminating method, and any laminating method known in the prior art may be used. According to preferred embodiments, however, the lamination is performed under vacuum to remove air bubbles. If vacuum conditions are used, then the vacuum level should preferably be around < 100 Pa, preferably < 10 Pa.

The curing of the LOCA may be performed during or after the laminating according to step iii) of the present invention. Curing conditions are to be chosen and adapted, depending on the respective LOCA used, and may include exposure of the LOCA to radiation, heat, and, in some cases, moisture. Curing methods and conditions generally depend on the respective LOCA formulation used, are generally known in the art and are not intended to restrict the herein described methods and devices in any way.

The presently described method is not limited, however, to the bonding of two substrates. Accordingly, it is envisaged that stacked assemblies comprising multiple substrate layers can be provided using the herein described methods and devices. Thus, for instance, further substrates, such as displays and display parts, may be laminated, for instance, on top of the second substrate. Accordingly, steps ii) and iii), as herein described, may be repeated and adapted to yield laminated articles comprising multiple layers, such as display stacks.

A display stack generally comprises more than two layers and may include the display, a touch screen, and a display window, all of which may need to be bonded together with sufficient adhesion and transparency.

Thus, according to the present invention, the bonding of at least two parts (substrates) is achieved by applying a LOCA material, using methods and devices as herein described, in the form of a thin film, which will be cured upon exposure to heat, pressure, UV radiation, chemical curing, or some combination of aforementioned before, during or after the lamination process, thus firmly adhering to the adjacent layers, bonding them together.

Liquid optically clear adhesives (LOCAs) suitable for employment in the methods described herein may be made of various materials. Conventional LOCAs may be acrylic, polyurethane, methylmethacrylate or silicone-based, wherein both LOCA formulations and necessary curing conditions are generally known in the art. Suitable examples of LOCA formulations may include, without limitation, those disclosed in WO 201429062 A1, WO 201608130 A1, WO 2019070866 A1, and WO 2013173977 A1.

In various embodiments, the substrate material may be a flexible or non-flexible, i.e. rigid, transparent, substantially transparent, or non-transparent substrate material and may be independently selected for each substrate used.

As used herein, "substantially transparent" refers to a material suitable for optical applications, e.g., has at least 85 % transmission over the wavelength range of from 380 to 780 nm.

Examples of polymeric substrate materials include, without limitation, polyethylene-2,6-naphthalate (PEN), polyethylene terephthalate (PET), polyimide (PI), polycarbonate (PC), polyethylene (PE), polyurethane (PU), polymethylmethacrylate (PMMA), polystyrene (PS), natural rubbers such as; polyisoprenes, polybutadienes, polychloraprenes, polyisobutylenes, nitrile butadiene, and styrene butadienes, saturated elastomeric materials such as; polydimethylsiloxane (PDMS), silicone rubbers, fluorosilicone rubbers, fluoroelastomers, perfluoroelastomers, ethylene vinyl acetate (EVA), thermoplastic elastomers such as styrene block copolymers, thermoplastic polyolefins, thermoplastic vulcanisates, thermoplastic polyurethane (TPU), thermoplastic copolyesters, and melt processable rubbers.

Metal foils may also be used as substrates, in particular planarised metal foils on which TFTs and displays can be created. Another suitable exemplary substrate material is glass.

According to various, non-limiting embodiments of the herein described manufacturing method, to be understood as a merely illustrative example only, the first substrate may be referred to as a base substrate, and the second substrate may be referred to as a top substrate.

The "base substrate", in the context of this invention, means the substrate, on which a top substrate will be attached to. The "base substrate" can be a display panel, for example, or a LCD. The LOCA will be preferably applied on the top side of the base substrate. The "top substrate" a cover lens, for instance and without limitation.

The top substrate, which is preferably a substantially transparent substrate, is attached to the applied adhesive layer preferably under ambient condition or under vacuum condition. Lamination under vacuum conditions is especially preferred to guarantee the best possible bubble-free bonding.

According to a preferred embodiment of the invention, the top side of the base substrate material is selected from glass and polymer materials, preferably plastic films, including in particular polyethylene terephthalate, polymethyl (meth)acrylate, and/or triacetate cellulose (TAC). A plastic film is a thin sheet of (preferably polymer and preferably transparent) material used to cover things. A preferred base substrate is a LCD module with polarizer film on top. In various embodiments, the TAC is the top surface of the polarizer. In this case, the adhesive will be directly bonded to the TAC surface.

According to another preferred embodiment of the invention, the material of the side of the top substrate, which shall be bonded, the substrate preferably being substantially transparent, is selected from glass and polymer materials, preferably plastic films, including in particular polyethylene terephthalate, polymethyl (meth)acrylate, and/or TAC.

The base substrate may be a display panel, preferably selected from a liquid crystal display, a plasma display, a light-emitting diode (LED) display, an electrophoretic display, and a cathode ray tube display, according to further embodiments of the invention.

In various embodiments, the display panel has touch functionality.

According to yet another embodiment, the top substrate is selected from a reflector, cover lens, touch panel, retarder film, retarder glass, a LCD, a lenticular lens, a mirror, an anti-glare or anti-reflective film, an anti-splinter film, a diffuser, and an electromagnetic interference filter. For example for 3D TV applications, a glass or film retarder will be bonded onto a LCD for passive 3D TV, or a TN LCD or lenticular lens is bonded to a regular TFT LCD for naked eye 3D.

The methods and devices herein disclosed may be used for the manufacturing of any touch panel sensor assembly, for instance to bond touch panel sensors that require two layers of indium-tin-oxide coated glass, and for cover lens bonding.

Of course, it is also envisaged that two or more top substrates may be laminated one after another on a base substrate, starting for example with an LCD as the base substrate, then bonding one layer of indium-tin-oxide coated glass on the base substrate using the herein described dispensing appliance and methods, after that bonding another layer of indium-tin-oxide coated glass on it using the herein described dispensing appliance and methods, and then bonding a cover lens on it using the herein described dispensing appliance and methods.

In yet another aspect, the present invention is directed to the use of a liquid optically clear adhesive (LOCA)-dispensing appliance as herein described for applying a liquid optically clear adhesive (LOCA) formulation onto a substrate surface.

It is understood that all embodiments disclosed herein in relation to the methods, devices and uses thereof are similarly applicable to articles formed therefrom/thereby, insofar applicable, and *vice versa.*

Accordingly, the present invention is also directed to a laminated article obtainable in a method as described herein.

Many modifications and other embodiments of the inventions set forth herein will come to mind to one skilled in the art to which these inventions pertain having the benefit of the teachings presented in the foregoing descriptions. Therefore, it is to be understood that the inventions are not to be limited to the specific embodiments disclosed and that modifications and other embodiments are intended to be included within the scope of the appended claims. Moreover, although the foregoing descriptions and the associated drawings describe some example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. Method for depositing a liquid optically clear adhesive (LOCA) onto a substrate surface, the dispensing being effected by a dispensing appliance comprising at least one dispensing jet valve that is moved across the substrate surface, **characterized in that** the at least one jet valve is controllable to be put in either active mode or inactive mode.

2. A liquid optically clear adhesive (LOCA)-dispensing appliance comprising at least one dispensing jet valve, **characterized in that** the at least one jet valve is controllable to be put in either active mode or inactive mode.

3. The method according to claim 1 or the liquid optically clear adhesive (LOCA)-dispensing appliance according to claim 2, **characterized in that** the dispensing appliance comprises a plurality of dispensing jet valves and each jet valve of the plurality of jet valves can be controlled independently of the other jet valves of the plurality of jet valves.

4. The method according to claim 1 or claim 3 or the liquid optically clear adhesive (LOCA)-dispensing appliance according to claim 2 or claim 3, **characterized in that** the plurality of jet valves comprises at least two, preferably at least three, more preferably at least four jet valves.

5. The method according to any one of claims 1, 3 and 4 or the liquid optically clear adhesive (LOCA)-dispensing appliance according to any one of claims 2 to 4, **characterized in that** the plurality of jet valves is arranged linearly.

6. The method according to any one of claims 1, and 4 to 5 or the liquid optically clear adhesive (LOCA)-dispensing appliance according to any one of claims 2 to 5, **characterized in that** the controlling of the at least one jet valve comprises terminating the dispensing (inactive mode), commencing/initiating the dispensing (active mode) and optionally adapting the dispensing intensity of the at least one jet valve when in active mode.

7. The method according to any one of claims 1 and 3 to 6 or the liquid optically clear adhesive (LOCA)-dispensing appliance according to any one of claims 2 to 6, **characterized in that** the controlling of the at least one jet valve is effected based on the scanning of the position and/or dimensions and/or geometric shape of the substrate surface.

8. A method for manufacturing a laminated article comprising the steps of:
iv) providing a first substrate;
v) applying a liquid optically clear adhesive (LOCA) onto at least part of the surface of said first substrate; and
vi) laminating said first substrate surface with a second substrate,
**characterized in that** step ii) is effected by a liquid optically clear adhesive (LOCA)-dispensing appliance according to any one of claims 2 to 7.

9. A laminated article obtainable in a method according to claim 8.

10. Use of a liquid optically clear adhesive (LOCA)-dispensing appliance according to any one of claims 2-7 for applying a liquid optically clear adhesive (LOCA) formulation onto a substrate surface.
